# EUROPÄISCHE PATENTSCHRIFT

(11) **EP 4 370 384 B1**
(45) Veröffentlichungstag und Bekanntmachung des Hinweises auf die Patenterteilung: **18.06.2025**
(21) Anmeldenummer: 22738613.3
(22) Anmeldetag: 27.06.2022
(51) Int. Cl.: B60R 21/0132, B60R 21/0134

(54) **VERFAHREN ZUR AUFPRALLERKENNUNG UND AKTIVIERUNG VON INSASSENSCHUTZEINRICHTUNGEN**
METHOD FOR DETECTING IMPACT AND ACTIVATING OCCUPANT PROTECTION DEVICES
PROCÉDÉ DE DÉTECTION D'IMPACT ET D'ACTIVATION DE DISPOSITIFS DE PROTECTION DES OCCUPANTS

(30) Priorität: 16.07.2021 EP 21465538; 19.07.2021 DE 102021207647
(43) Veröffentlichungstag der Anmeldung: 22.05.2024
(73) Patentinhaber: Continental Automotive Technologies GmbH, 30175 Hannover (DE)
(72) Erfinder: STANCALIE, Laurentiu, 90411 Nürnberg (DE); STOICAN, Gabriel-Cosmin, 90411 Nürnberg (DE)
(74) Vertreter: Continental Corporation
(86) Internationale Anmeldenummer: PCT/EP2022/067564
(87) Internationale Veröffentlichungsnummer: WO 2023/285123

(56) Entgegenhaltungen:
- WO-A1-02/30716
- DE-A1- 10 108 849
- DE-A1- 19 729 960
- US-A- 5 014 810

## Beschreibung

Die Erfindung betrifft ein Verfahren zur Aufprallerkennung und Aktivierung von Insassenschutzeinrichtungen gemäß dem Oberbegriff von Anspruch 1. So ist aus der DE 197 29 960 ein Verfahren zur Aufprallerkennung, insbesondere für Kraftfahrzeuge, zur Aktivierung von Insassenschutzeinrichtungen bekannt, bei dem ein Beschleunigungssignal eines Beschleunigungssensors gemessen wird. Das Beschleunigungssignal direkt oder ein daraus abgeleitetes Signal, wie beispielsweise das integrierte Beschleunigungssignal, wird dann mit einer Auslöseschwelle verglichen, die einstellbar ist. Für dieses Verfahren ist zumindest ein sogenannter Pre-Crash-Sensor vorgesehen, der die Änderung der Relativgeschwindigkeit und/oder des Relativabstandes von Kollisionsobjekten innerhalb eines Nahbereichs der Fahrzeugumgebung registriert. Falls der Pre-Crash-Sensor einen sicherheitskritischen Zustand wie einen bevorstehenden Aufprall erkennt, wird die Auslöseschwelle zur Aktivierung von Insassenschutzeinrichtungen herabgesetzt. Als sogenannte Pre-Crash-Senosren kommen dabei neben Radar- und Kamerasensoren auch Lidar- oder Ultraschallsensoren oder eine Fusionierung der Daten mehrerer solchen Sensoren in Frage.

Aus der EP 0728624 A2 ist ebenfalls eine Vorrichtung zum Steuern von Insassenschutzeinrichtungen zu entnehmen, bei dem neben Beschleungiungssensoren zum Bestimmen eines Aufprallwertes auch Umfeldsensoren vorhanden sind, um das Auslöseverhalten in Abhängigkeit der Umfeldsensoren anzupassen.

Zwar erfolgt weiterhin die eigentliche Auslösung in Abhängigkeit eines Aufprallwertes, der funktionell mit der Aufprallbeschleunigung zusammenhängt und der mit einem Auslöseschwellwert verglichen wird, wird jedoch der Auslöseschwellwert in Abhängigkeit von Informationen des Umfeldsensors, insbesondere der Relativgeschwindigkeit, Auftreffwinkel und Zeitpunkt variiert, insbesondere bei hoher Relativgeschwindigkeit auf einen schweren Aufprall geschlossen und die Auslöseschwelle herabgesetzt, um eine frühzeitige Auslösung zu ermöglichen.

Dabei hat es sich aber als nachteilig erwiesen, dass die Absenkung der Auslöseschwelle für Beschleunigungssensoren im Falle eines drohenden Aufpralls zu einer zu frühen Auslösung der Insassenrückhalteeinrichtung führen kann, wenn bereits in der Zeitspanne vor dem Aufprall die abgesenkte Beschleunigungsauslöseschwelle überschritten wird. Dies kann z.B. bei Bodenunebenheiten oder einer Bordsteinüberfahrung unmittelbar vor dem eigentlichen, vom Näherungssensor erfassten Hindernis geschehen oder aber bei entsprechenden Störungen zu Beginn eines Unfalls, insbesondere aber eben auch bei sogenannten Nichtauslösefällen, also Crashereignissen geringerer Schwere, die eigentlich die Auslösung dieser Rückhaltemittel noch nicht erfordern. Daher sieht die WO 2002/30716 A1 ein Verfahren zur Aktivierung von Insassenschutzeinrichtungen vor, bei dem innerhalb eines vorgegebenen Nahbereiches der Fahrzeugumgebung eine Annäherungsgeschwindigkeit an ein Kollisionsobjekt bestimmt wird und, falls die Annäherungsgeschwindigkeit oberhalb eines vordefinierten Schwellenwertes liegt, ein voraussichtlicher Aufprallzeitpunkt auf das Kollisionsobjekt und ein von dem voraussichtlichen Aufprallzeitpunkt ausgehender Zeitbereich definiert wird, in dem bereits nach einer Plausibilitätsprüfung die Aktivierung der zugeordneten Insassenschutzeinrichtungen erfolgt.

Dabei wird jedoch die Bestimmung des Zeitbereichs der Plausibilitätsprüfung in Abhängigkeit einer Signalqualität wenigstens eines Näherungssensors, einer Fahrdynamik und einer Kollisionsobjektgeometrie angepasst und zudem zur Plausibilitätsprüfung ein Beschleunigungssignal oder ein hierzu äquivalentes Signal dahingehend geprüft wird, ob es über einer vordefinierten Schwelle liegt und vorzeichenmäßig mit der von dem wenigstens einen Näherungssensor ermittelten Aufprallrichtung übereinstimmt. Zwar wird durch diesen Ansatz die Signalqualität des Näherungssensors berücksichtigt, bleibt aber durch die feste Plausibilisierungsprüfung dennoch die Gefahr, dass auch durch Kollisionen niedrigerer Geschwindigkeit evtl. in Kombination mit sonstigen Erschütterungen oder Störungen es Insassenschutzeinrichtungen ausgelöst und dadurch der Fahrer massiv gestört wird, obwohl die Schwere des Aufpralls dies eigentlich nicht rechtfertigt.

Die Aufgabe der vorliegenden Erfindung ist es, die Sicherheit im Straßenverkehr weiter zu erhöhen. Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass ein quasi gerade zu der bisherigen Herabsetzung der Auslöseschwelle inverses Vorgehen eine Adaption der Auslöseschwelle erfolgt.

So ist vorgesehen, dass ein Startzeitpunkt für den Algorithmus und die Schwellenanpassung auf den zu erwarteten Aufprallzeitpunkt gesetzt wird, sofern zumindest ein Parameter des Umfeldsensors eine vorgegebene Bedingung erfüllt. Der Umfeldsensor kann und wird diesen Startzeitpunkt also bereits vor dessen Eintreten aus den bekannten Trajektoriebetrachtungen ableiten und den Algorithmus quasi aufwecken können.

Ab diesem Startzeitpunkt wird die Auslöseschwelle ausgehend von einem Startwert jedoch sogar noch erhöht, sofern das Beschleunigungssignal oder das daraus abgeleitete Signal eine Mindestbedingung erfüllt. Steigt also das Beschleunigungssignal oder das daraus abgeleitete Signal über die Mindestbedingung, wird zugleich auch die Auslöseschwelle. Ist jedoch zum Startzeitpunkt das Beschleunigungssignal oder das daraus abgeleitete Signal noch unter der Mindestbedingung, bleibt die Auslöseschwelle zunächst auf dem Startwert und steigt eben erst an, wenn die Mindestbedingung erfüllt ist, so dass eine Fehlauslösung bei fehlerhafter Ermittlung des Auslösezeitpunkts dennoch vermieden wird. Die Mindestbedingung ist aber deutlich kleiner als der Startwert für die Auslöseschwelle und reicht damit das Beschleunigungssignal oder das daraus abgeleitete Signal keinesfalls aus, um mit der Mindestbedingung auch zugleich den Startwert zu übersteigen. Vielmehr kommt es selbst bei Auslösefällen immer erst auch zu einer Phase, in welcher schon die Auslöseschwelle mit erhöht wird. Durch den frühzeitigen Startzeitpunkt und die sofortige Adaption der Auslöseschwelle bei Erfüllen der Mindestbedingung kann die Sicherheitsreserve zwischen typischen Nicht-Auslöse-Verläufen und der Auslöseschwelle erhöht und der Algorithmus robuster gegen Störungen und Fehlauslösungen gemacht werden. Wirkliche Auslösefälle werden dennoch innerhalb der vorgegebenen Zeit die Auslöseschwelle übersteigen, evtl. sogar durch den vom Umfeldsensor gesetzten Startzeitpunkt geringfügig früher, ist es jedoch mit der gezielten Erhöhung gerade nicht das Ziel, frühzeitiger auszulösen, sondern vielmehr sicherer zwischen Auslöse- und Nichtauslösefällen zu unterscheiden.

Vorzugsweise ist die Mindestbedingung für die Erhöhung der Auslöseschwelle das Beschleunigungssignal oder das daraus abgeleitete Signal eine Mindestschwelle übersteigt.

Vorzugsweise gibt es aber eine obere Grenze für die Auslöseschwelle. Die Auslöseschwelle wird vom Startwert aus fortlaufend nur so lange erhöht, bis ein vorgegebener Maximalwert der Auslöseschwelle erreicht wurde. Zudem muss grundsätzlich dabei zudem das Beschleunigungssignal oder das daraus abgeleitete Signal die Mindestbedingung erfüllen.

Um im Gesamtkonzept eine Sicherheit auch bei Ausfall des Umfeldsensors oder nicht hinreichender Signalqualität oder nicht Erreichen der Bedingungen für die Parameter zum Setzen des Startzeitpunkts zu haben, wird alternativ als Startzeitpunkt auch derjenige Zeitpunkt verwendet wird, in welchem das Beschleunigungssignal oder das daraus abgeleitete Signal eine vorgegebene Schwelle überschreitet, sofern eben zuvor durch den Umfeldsensor kein Startzeitpunkt gesetzt wurde.

In einer weiteren, im Folgenden in den Figuren noch detaillierter beschriebenen Ausgestaltung wird zudem die Erhöhung in deren Anstieg auch nochmal adaptiert, in dem nämlich die Erhöhung der Auslöseschwelle mit einem ersten Anstieg erfolgt, solange das Beschleunigungssignal oder das daraus abgeleitete Signal eine Mindestbedingung erfüllt und zudem noch unter einer zweiten Bedingung ist. Ab Überschreiten der zweiten Bedingung erfolgt die Erhöhung der Auslöseschwelle mit einem zweiten, gegenüber dem ersten höheren Anstieg. Dadurch wird generell die Auslöseschwelle an die typischen Signalverläufe zu Beginn der diversen Nichtauslösefälle noch besser adaptiert. Durch diese Anpassung wird die durch den frühen Startzeitpunkt und Erhöhung der Auslöseschwelle erreichte Sicherheitsreserve auch in den an sich besonders kritischen zweiten Zeitbereich aufrecht erhalten, in welchen eben auch Nichtauslösefälle im Beschleunigungssignal oder das daraus abgeleitete Signal durchaus erhebliche Amplituden annehmen können, insbesondere wenn zusätzlich noch Störungen auf der Fahrbahn, bspw. Bordsteintreffer usw. das Signal natürlich auch mit beeinflussen und erhöhen.

Das Verfahren wird implementiert in einen Algorithmus eines Steuergeräts zur Aufprallerkennung und Aktivierung von Insassenschutzeinrichtungen für ein Kraftfahrzeug und ist dazu in dessen Speicher hinterlegt.

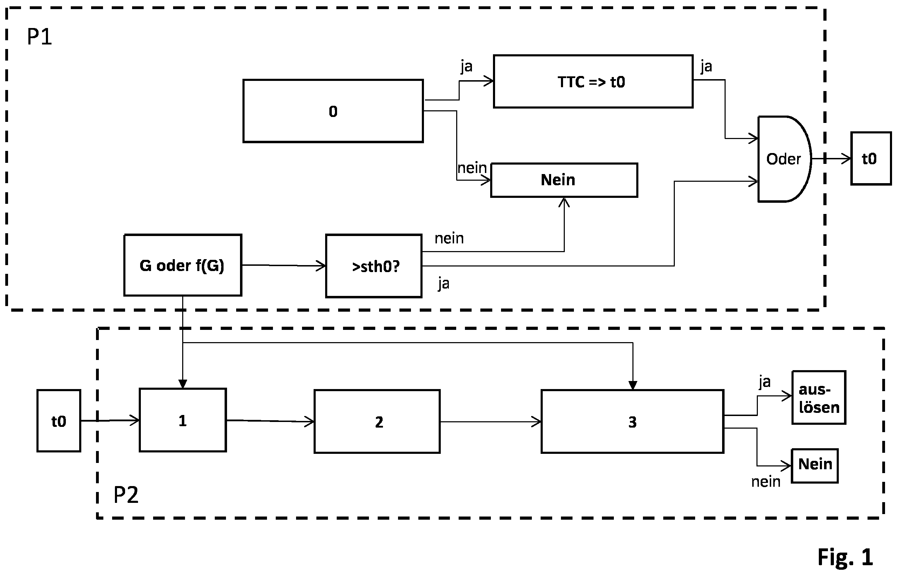

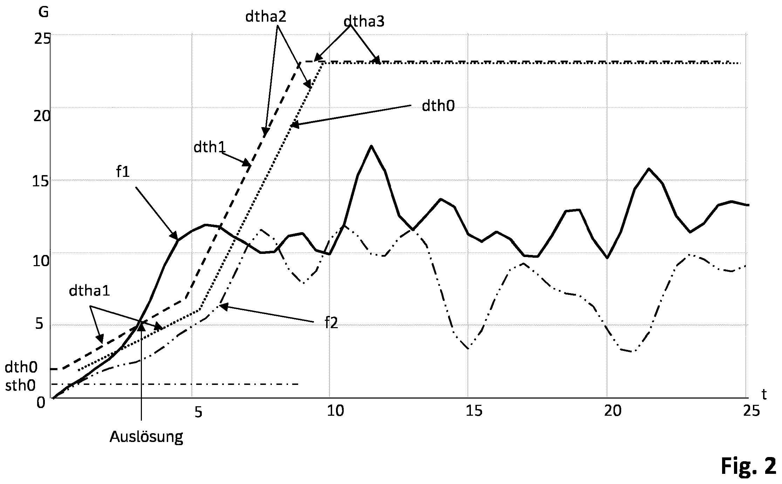

Die Erfindung wird nachfolgend anhand von Ausführungsbeispielen unter Bezugnahme auf die Figuren näher erläutert. Dabei skizziert Figur 1 den funktionalen Ablauf im Algorithmus des Steuergeräts anhand eines Flussbildes, während Figur 2 dies anhand der Signale zu verdeutlichen versucht.

Dabei skizziert die Phase P1 den Ablauf vor dem Start des eigentlichen Auslösealgorithmus zum Startzeitpunkt T0 und die Phase P2 den Ablauf nach dem Startzeitpunkt T0.

Der Funktionsblock 0 skizziert dabei den Umfeldsensor und die Auswertung der Signale dieses Umfeldsensors, insbesondere die Ableitung eines zu erwartenden Aufprallzeitpunkts TTC sowie gegebenenfalls weiterer vorgegebener Parameter, wie beispielsweise der Bewertung des erwarteten Kollisionsobjekten hinsichtlich seiner Art, der Schwere des zu erwartenden Aufpralls und der Signal- bzw. Entscheidungsqualität, also auch Eintrittswahrscheinlichkeit. Die vorgegebenen Bedingungen für die Signale bzw. Parameter des Umfeldsensors gegeben, wird der Startzeitpunkt (t0) auf den zu erwarteten Aufprallzeitpunkt (TTC) gesetzt.

Darüber hinaus skizziert die Figur 1 im mit ">sth0?"-markierten Funktionsblock auch den vorzugsweise zweiten, alternativen Pfad zur Aktivierung des eigentlichen Auslösealgorithmus, bei dem nämlich das Beschleunigungssignal (G) oder das daraus abgeleitete Signal (f(G)) mit einer eine vorgegebenen Startschwelle (sth0) verglichen wird und bei Überschreitung dieser ebenfalls der eigentliche Auslösealgorithmus aktiviert wird.

Die beiden Alternativen, also das Setzen des Startzeitpunkt durch den Umfeldsensor bzw. durch den Beschleunigungssensor sind funktional alternativ, also als logische Oderverknüpfung zu verstehen. Sind die beiden genannten Optionen nicht erfüllt, wird der eigentliche Auslösealgorithmus noch nicht aktiviert (No). Entsprechend kann der Mikroprozessor noch im Stromsparmodus betrieben und Teile des Algorithmus inaktiv gelassen werden.

Ab dem Startzeitpunkt t0 hingegen wird der eigentliche Auslösealgorithmus aktiv und nun auch die Auslöseschwelle (dth1 bzw. dth0) ausgehend von einem Startwert (dth0) im Funktionsblock 2 erhöht, sofern im Funktionsblock 1 auch festgestellt wurde, das Beschleunigungssignal oder das daraus abgeleitete Signal zumindest eine Mindestbedingung erfüllt und der vorgegebene Maximalwert (dth3) der Auslöseschwelle noch nicht erreicht wurde.

Im Funktionsblock 3 erfolgt nun abschließend die eigentliche Auslöseentscheidung durch den Vergleich mit der sich so adaptiv an passenden Auslöseschwelle und bei entsprechendem übersteigen der Auslöseschwelle durch das Beschleunigungssignal bzw. das daraus abgeleitete Signal die Auslösung zumindest bestimmter einzelner oder aller Insassenschutzeinrichtungen, wobei die Zuordnung der auszulösen Insassenschutzeinrichtungen und natürlich von weiteren Parametern, wie beispielsweise erkannter Richtung des Aufpralls und erkannter Schwere noch weiter adaptiert werden kann.

Die Figur 2 skizziert nun rein exemplarisch als Funktion F1 (Linienform durchgezogen) den Signalverlauf eines Auslösefalls sowie als Funktion F2 (Linienform - ** -) die gerade im Beginn der Kollision teils schwer unterscheidbaren Nichtauslösefälle.

Mit dth0 als gepunktete Linie dargestellt ist dabei der Verlauf der Auslöseschwelle für denjenigen Fall gezeigt, in welchem der eigentliche Auslösealgorithmus erst auf Basis des Beschleunigungssignals bzw. des daraus abgeleiteten Signals und dem Überschreiten der Startschwelle sth0 aktiviert wird. Insofern setzt diese Linie auch erst mit Überschreiten dieser Schwelle sth0 ein.

Mit dth1 gezeichnet und als gestrichelte Linie dargestellt ist der Verlauf der Auslöseschwelle für den Fall gezeigt, bei welchem durch den Umfeldsensor bereits vorab der Startzeitpunkt T0 auf den erwarteten Kollisionszeitpunkt gesetzt und bei Eintritt dieses Startzeitpunkt der eigentliche Auslösealgorithmus bereits aktiviert wird.

Wenn zu diesem Startzeitpunkt das Beschleunigungssignal noch nicht die Mindestbedingung für die Erhöhung erreicht haben sollte, bleibt für eine solche kurze Zeitspanne auch die Auslöseschwelle dth1 noch auf dem Startwert dth0. Da jedoch die Mindestbedingung für die Erhöhung relativ niedrig gesetzt werden kann, beginnt die Erhöhung dtha1 für dth1 frühzeitiger und erreicht dadurch insbesondere die Auslöseschwelle dth1 einen größeren Sicherheitsabstand gegenüber dem skizzierten Strich-Punkt-Punkt-Strich-(-**-) - Signalverlauf des Nicht-Auslösefalls. Es sei nochmals betont, dass weniger der zeitlich leicht nach hinten verschobene Auslösezeitpunkt (Fire) zwischen den beiden Kennlinien dth0 und dth1 entscheidend ist als der höhere Sicherheitsabstand zu den Nichtauslösefällen, welcher durch den frühzeitigen Algorithmusstart erreicht wird, quasi die Parallelverschiebung der Bereiche mit den Anstiegen dtha1 und dtha2.

Um funktional eine noch bessere Abgrenzung zwischen Auslöse- und Nichtauslösefällen setzen zu können, ist in dieser bevorzugten Ausgestaltungsform auch noch eine Anpassung des Anstiegs dtha1 zu dtha2 des Auslöseschwellwerts vorgesehen.

Solange das Beschleunigungssignal oder das daraus abgeleitete Signal eine Mindestbedingung erfüllt und zudem unter einer zweiten Bedingung ist, erfolgt also die Erhöhung der Auslöseschwelle mit einem ersten Anstieg dtha1, während bei Überschreiten der zweiten Bedingung die Erhöhung der Auslöseschwelle mit einem zweiten, gegenüber dem ersten höheren Anstieg dtha2 erfolgt. Dadurch kann die Auslöseschwelle noch präziser zwischen den definierten Fällen adaptiert und die Sicherheit vor Fehlauslösungen weiter erhöht werden.

Hinzuweisen ist, dass die konkreten Werte und Verläufe der Kennlinie nur exemplarisch zu verstehen und auf den jeweiligen Einzelfall des jeweiligen Fahrzeugs, dessen Crashverhalten, aber auch Herstellervorgaben angepasst werden kann.

## Patentansprüche

1. Verfahren zur Aufprallerkennung und Aktivierung von Insassenschutzeinrichtungen,
bei dem zumindest ein Beschleunigungssignal zumindest eines Beschleunigungssensors gemessen direkt oder ein daraus abgeleitetes Signal mit einer Auslöseschwelle verglichen wird, wobei
zumindest ein Umfeldsensor zum Erkennen eines drohenden Aufpralls sowie zumindest eines Parameters dieses drohenden Aufpralls, insbesondere einem zu erwarteten Aufprallzeitpunkt und Aufprallschwere vorgesehen ist und
das Auslöseverhalten in Abhängigkeit von den Parametern des Umfeldsensors angepasst wird, **dadurch gekennzeichnet, dass**
ab einem Startzeitpunkt (t0) die Auslöseschwelle (dth1=dth0+fth(G,t)) ausgehend von einem Startwert (dth0) erhöht fth(G,t)wird, sofern das Beschleunigungssignal oder das daraus abgeleitete Signal eine Mindestbedingung erfüllt, wobei der Startzeitpunkt (t0) auf den zu erwarteten Aufprallzeitpunkt (TTC) gesetzt wird, sofern zumindest ein Parameter des Umfeldsensors eine vorgegebene Bedingung erfüllt.

2. Verfahren nach Anspruch 1, **dadurch gekennzeichnet, dass** die Auslöseschwelle (dth1) vom Startwert aus fortlaufend erhöht wird, solange das Beschleunigungssignal oder das daraus abgeleitete Signal eine Mindestbedingung erfüllt oder ein vorgegebener Maximalwert (dth3) der Auslöseschwelle erreicht wurde.

3. Verfahren nach einem der vorangehenden Ansprüche, **dadurch gekennzeichnet, dass** als Mindestbedingung für die Erhöhung der Auslöseschwelle das Beschleunigungssignal oder das daraus abgeleitete Signal eine Mindestschwelle übersteigt.

4. Verfahren nach einem der vorangehenden Ansprüche, **dadurch gekennzeichnet , dass** alternativ als Startzeitpunkt auch derjenige Zeitpunkt verwendet wird, in welchem das Beschleunigungssignal oder das daraus abgeleitete Signal eine vorgegebene Schwelle (sth0) überschreitet, sofern zuvor durch den Umfeldsensor kein Startzeitpunkt gesetzt wurde.

5. Verfahren nach einem der vorangehenden Ansprüche, **dadurch gekennzeichnet, dass** solange das Beschleunigungssignal oder das daraus abgeleitete Signal eine Mindestbedingung erfüllt und zudem unter einer zweiten Bedingung, die Erhöhung der Auslöseschwelle mit einem ersten Anstieg erfolgt, während bei Überschreiten der zweiten Bedingung die Erhöhung der Auslöseschwelle mit einem zweiten, gegenüber dem ersten höheren Anstieg erfolgt.

6. Steuergerät zur Aufprallerkennung und Aktivierung von Insassenschutzeinrichtungen für ein Kraftfahrzeug mit einem Speicher mit einem Algorithmus zur Durchführung des Verfahrens nach einem der vorangehenden Ansprüche.

## Claims

1. Method for detecting an impact and activating occupant protection devices,
in which at least one acceleration signal of at least one acceleration sensor is measured directly or a signal derived therefrom is compared with a trigger threshold, wherein
there is provision for at least one environment sensor for detecting an imminent impact and at least one parameter of this imminent impact, in particular an expected impact time and impact severity, and
the trigger behaviour is adapted on the basis of the parameters of the environment sensor, **characterized in that**
the trigger threshold (dth1=dth0+fth(G,t)) is increased fth(G,t) from a starting value (dth0) from a starting time (t0) if the acceleration signal or the signal derived therefrom satisfies a minimum condition, wherein
the starting time (t0) is set to the expected impact time (TTC) if at least one parameter of the environment sensor satisfies a predefined condition.

2. Method according to Claim 1, **characterized in that** the trigger threshold (dth1) is increased continuously from the starting value while the acceleration signal or the signal derived therefrom satisfies a minimum condition or a predefined maximum value (dth3) of the trigger threshold has been reached.

3. Method according to either of the preceding claims, **characterized in that** the acceleration signal or the signal derived therefrom exceeds a minimum threshold as the minimum condition for increasing the trigger threshold.

4. Method according to one of the preceding claims, **characterized in that**, as an alternative, the time at which the acceleration signal or the signal derived therefrom exceeds a predefined threshold (sth0) is also used as the starting time if no starting time has been set by the environment sensor beforehand.

5. Method according to one of the preceding claims, **characterized in that** while the acceleration signal or the signal derived therefrom satisfies a minimum condition, and moreover under a second condition, the trigger threshold is increased with a first rise, whereas, when the second condition is exceeded, the trigger threshold is increased with a second rise, which is higher than the first.

6. Control unit for detecting an impact and activating occupant protection devices for a motor vehicle, having a memory containing an algorithm for carrying out the method according to one of the preceding claims.

## Revendications

1. Procédé de détection d'impact et d'activation de dispositifs de protection d'occupants,
dans lequel au moins un signal d'accélération d'au moins un capteur d'accélération est mesuré directement ou un signal dérivé de celui-ci est comparé à un seuil de déclenchement,
au moins un capteur d'environnement étant prévu pour détecter un impact imminent ainsi qu'au moins un paramètre de cet impact imminent, en particulier un moment d'impact prévu et la gravité de l'impact, et
le comportement de déclenchement étant adapté en fonction des paramètres du capteur d'environnement, **caractérisé en ce que**
à partir d'un instant de départ (t0), le seuil de déclenchement (dth1=dth0+fth(G,t)) est augmenté à partir d'une valeur de départ (dth0) de fth(G,t) si le signal d'accélération ou le signal dérivé de celui-ci remplit une condition minimale,
le point de départ (t0) est fixé au moment prévu de l'impact (TTC) si au moins un paramètre du capteur d'environnement remplit une condition prédéfinie.

2. Procédé selon la revendication 1, **caractérisé en ce que** le seuil de déclenchement (dth1) est augmenté en continu à partir de la valeur de départ tant que le signal d'accélération ou le signal dérivé de celui-ci remplit une condition minimale ou qu'une valeur maximale prédéfinie (dth3) du seuil de déclenchement a été atteinte.

3. Procédé selon l'une des revendications précédentes, **caractérisé en ce que** la condition minimale pour l'augmentation du seuil de déclenchement est le fait que le signal d'accélération ou le signal dérivé de celui-ci dépasse un seuil minimal.

4. Procédé selon l'une des revendications précédentes, **caractérisé en ce que**, comme instant de démarrage, on utilise également, en variante, l'instant où le signal d'accélération ou le signal dérivé de celui-ci dépasse un seuil prédéfini (sth0), dans la mesure où aucun instant de démarrage n'a été défini auparavant par le capteur d'environnement.

5. Procédé selon l'une des revendications précédentes, **caractérisé en ce que**, tant que le signal d'accélération ou le signal dérivé de celui-ci remplit une condition minimale et qu'en outre, dans une deuxième condition, l'augmentation du seuil de déclenchement s'effectue avec une première hausse, tandis que, lorsque la deuxième condition est dépassée, l'augmentation du seuil de déclenchement s'effectue avec une deuxième hausse, supérieure à la première.

6. Unité de commande pour la détection d'un impact et l'activation de dispositifs de protection d'occupants pour un véhicule automobile, comportant une mémoire avec un algorithme pour la mise en œuvre du procédé selon l'une des revendications précédentes.
